# EUROPÄISCHE PATENTSCHRIFT

(11) **EP 3 784 514 B1**
(45) Veröffentlichungstag und Bekanntmachung des Hinweises auf die Patenterteilung: **26.01.2022**
(21) Anmeldenummer: 19720041.3
(22) Anmeldetag: 15.04.2019
(51) Int. Cl.: B60K 6/40, B60K 6/387, F16D 1/076

(54) **HYBRIDMODUL, VERFAHREN ZUR MONTAGE DES HYBRIDMODULS UND ANTRIEBSANORDNUNG**
HYBRID MODULE, METHOD FOR ASSEMBLING THE HYBRID MODULE AND DRIVE ARRANGEMENT
MODULE HYBRIDE, PROCÉDÉ DE MONTAGE DU MODULE HYBRIDE ET ENSEMBLE D'ENTRAÎNEMENT

(30) Priorität: 26.04.2018 DE 102018110016
(43) Veröffentlichungstag der Anmeldung: 03.03.2021
(73) Patentinhaber: Schaeffler Technologies AG & Co. KG, 91074 Herzogenaurach (DE)
(72) Erfinder: STOBER, Benjamin, 67480 Forstfeld (FR); LEHMANN, Steffen, 76275 Ettlingen (DE); HUBER, Lionel, 67410 Drusenheim (FR)
(86) Internationale Anmeldenummer: PCT/DE2019/100342
(87) Internationale Veröffentlichungsnummer: WO 2019/206369

(56) Entgegenhaltungen:
- EP-A1- 1 736 345
- DE-A1- 4 013 298
- DE-A1-102012 219 728
- DE-A1-102015 225 421

## Beschreibung

Die Erfindung betrifft ein Hybridmodul für ein Kraftfahrzeug zum Ankoppeln einer Verbrennungskraftmaschine sowie eines Getriebes, ein Verfahren zur Montage des Hybridmoduls und eine Antriebsanordnung, umfassend das Hybridmodul sowie ein Antriebsaggregat.

Aus dem Stand der Technik sind Hybridmodule bekannt, die durch Ankopplung eines Verbrennungsmotors an einen Antriebsstrang eines Fahrzeugs einen Elektromotorbetrieb mit einem Verbrennungsmotorbetrieb kombinieren können. Solche Hybridmodule weisen meist einen Elektromotor, eine Trennkupplung, deren Betätigungssystem, Lager und Gehäusekomponenten auf, die die drei Hauptkomponenten zu einer funktionstüchtigen Einheit verbinden.

Der Elektromotor ermöglicht das elektrische Fahren, Leistungszuwachs zum Verbrennungsmotorbetrieb und Rekuperieren. Die Trennkupplung und deren Betätigungssystem sorgen für das Ankuppeln oder Abkuppeln des Verbrennungsmotors.

Wenn ein Hybridmodul mit einer Kupplungseinrichtung derart kombiniert wird, dass sich das Hybridmodul in Drehmomentübertragungsrichtung zwischen Verbrennungsmotor und Getriebe befindet, müssen im Kraftfahrzeug der Verbrennungsmotor, das Hybridmodul, die Kupplungseinrichtung mit ihren Betätigungssystemen und das Getriebe hinter- oder nebeneinander angeordnet werden.

Des Weiteren ist es üblich, z.B. ein Zweimassenschwungrad oder eine Schwungscheibe über mehrere Verschraubungen mit der Kurbelwelle zu verbinden, um das auftretende Drehmoment übertragen zu können.

Verbindungen von Zweimassenschwungrad und Kurbelwelle, auch mittels Axialverzahnungen sind z.B. aus der DE 10 2015 225421 A1 und der DE 10 2012 219728 A1 bekannt.

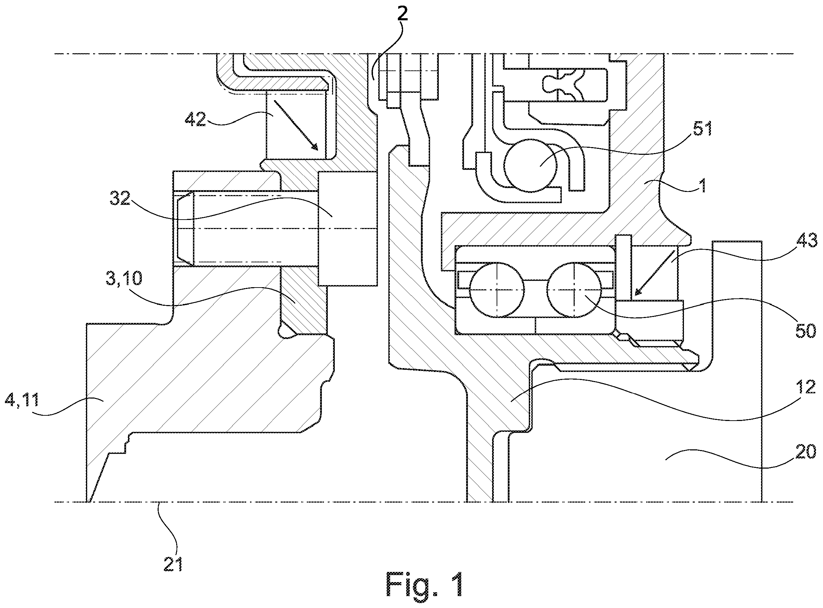

Eine aus dem Stand der Technik bekannte Antriebsanordnung ist in Figur 1 dargestellt. Dabei zeigt Fig. 1 einen Teilschnitt einer Antriebsanordnung, umfassend ein Hybridmodul gemäß dem Stand der Technik.

In Fig. 1 sind dabei unter anderem eine Kurbelwelle 11, ein Schwingungsdämpfer 10, eine drehmomentübertragende Schraubenverbindung 32, wobei diese vorzugsweise über mehrere Verschraubungen realisiert wird, eine Kupplungseinrichtung 12 und eine Getriebewelle 20 gezeigt. Dabei sind der Schwingungsdämpfer 10 und die Kupplungseinrichtung 12 zumindest bereichsweise im oder am Hybridmodulgehäuse 1 angeordnet. Das Drehmoment wird dabei, sofern das Hybridmodul montiert und an ein Elements des Antriebsstrangseines Kraftfahrzeugs angekoppelt ist, von der Kurbelwelle 11 zum Schwingungsdämpfer 10 und anschließend über die Kupplungseinrichtung 12 an die Getriebewelle 20 übertragen. Die Bauteile rotieren dabei um die Rotationsachse 21 des Hybridmoduls.

Gemäß dem Stand der Technik ist dabei die Kurbelwelle 11 mit dem Schwingungsdämpfer 10 über zumindest eine Schraubenverbindung 32 mechanisch verbunden. Über die Kupplungseinrichtung 12 kann derart das Drehmoment an das Getriebe bzw. die Getriebewelle übertragen werden. Ein Kugellager 50 stützt dabei die Kupplungseinrichtung 12 am Hybridmodulgehäuse 1 ab. Ein Ausrücklager 51 ist hier radial außerhalb des Kugellagers 50 im Hybridmodul-Innenraum 2 angeordnet und ist an einen Aktor angeschlossen, um die Kupplungseinrichtung 12 zu schalten.

Der dargestellte Stand der Technik macht deutlich, dass aufgrund des engen Bauraums ein Durchgriff zu den Schraubenverbindungen 32, um diese zu lösen oder zu verschrauben, nicht möglich ist, wodurch das gesamte Hybridmodul nicht als ein montiertes Gesamtsystem an einen Kunden geliefert und dort an einem Abtriebselement eines Kraftfahrzeug-Antriebsstranges montiert werden kann.

Ein Freiräumen des benötigten Bauraums würde den Bauraum für Schwingungsdämpfer und Kupplungseinrichtung in einem Ausmaß einschränken, in welchem deren Funktionen den Anforderungen nicht mehr genügen würden.

Hiervon ausgehend liegt der vorliegenden Erfindung die Aufgabe zugrunde, ein Hybridmodul für ein Kraftfahrzeug sowie ein Verfahren zur Montage des Hybridmoduls zur Verfügung zu stellen, mit welchem eine einfache und kostengünstige Montage des Hybridmoduls in einem gering bemessenen axialen Bauraum ermöglicht wird.

Die Aufgabe wird durch das erfindungsgemäße Hybridmodul nach Anspruch 1 sowie durch das Verfahren zur Montage nach Anspruch 5 gelöst. Vorteilhafte Ausgestaltungen des Hybridmoduls sind in den Unteransprüchen 2 bis 4 angegeben. Ergänzend wird eine Antriebsanordnung für ein Kraftfahrzeug, welches das Hybridmodul aufweist, gemäß Anspruch 6 zur Verfügung gestellt. Eine vorteilhafte Ausgestaltung der Antriebsanordnung ist in Unteranspruch 7 angegeben.

Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die Begriffe "axial" und "radial" beziehen sich im Rahmen der vorliegenden Erfindung immer auf die Rotationsachse der rotierenden Bauteile des Hybridmoduls sowie auf die Rotationsachse der Kurbelwelle.

Die Erfindung betrifft ein Hybridmodul für ein Kraftfahrzeug zum Ankoppeln einer Verbrennungskraftmaschine sowie eines Getriebes. Dabei umfasst das Hybridmodul eine elektrische Maschine, eine Kupplungseinrichtung sowie ein Eingangselement. Das Eingangselement ist dabei insbesondere an einem vom Hybridmodul umfassten Schwingungsdämpfer, wie z.B. einem Zweimassenschwungrad, ausgebildet, mit welchem das Hybridmodul an einem Abtriebselement, insbesondere einem Abtriebselement einer Verbrennungskraftmaschine, wie zum Beispiel einer Kurbelwelle, zur Übertragung von Drehmoment anschließbar ist. Das Hybridmodul kennzeichnet sich außerdem dadurch, dass das Eingangselement ein erstes Axial-Verzahnungselement aufweist. Insbesondere ist das erste Axial-Verzahnungselement ein Hirth-Verzahnungselement. Das Abtriebselement muss dann ein entsprechend komplementär ausgestaltetes zweites Axial-Verzahnungselement aufweisen,welches bei Ausgestaltung des ersten Axial-Verzahnungselements demzufolge ein zweites Hirth-Verzahnungselement sein muss. Das erste Axial-Verzahnungselement und das zweite Axial-Verzahnungselement bilden dabei eine Axial-Verzahnung aus, welche das Abtriebselement mit dem Eingangselement zur Übertragung von Drehmoment auf das Hybridmodul form- und/oder kraftschlüssig koppelt. Vorzugsweise bilden das erste Axial-Verzahnungselement und das zweite Axial-Verzahnungselement zusammen eine Hirth-Verzahnung aus.

Gemäß der Erfindung ist das erste Axial-Verzahnungselement dazu ausgestaltet, mittels wenigstens einer Schraubverbindung mit dem zweiten Axial-Verzahnungselement axial fest verbunden zu werden.

Gemäß einer vorteilhaften Ausführungsform ist die zuvor erwähnte Schraubverbindung durch einen zentral durch das erste Axial-Verzahnungselement führenden Schraub-Bolzen realisierbar. Der Schraub-Bolzen ist dabei im Wesentlichen koaxial zur Rotationsachse des Hybridmoduls angeordnet.

In der erfindungsgemäßen Ausführungsform stützt sich die Schraubverbindung axial an einem Druckstück ab. Das Druckstück ist wiederum zur axialen Anlage am ersten Axial-Verzahnungselement ausgebildet, um dieses in Richtung auf das zweite Axial-Verzahnungselement zu drücken.

Derart wird der Form- und/oder Kraftschluss zwischen den beiden Verzahnungselementen gewährleistet. Das Druckstück kann auch als einfache Unterlegscheibe ausgeführt sein.

Des Weiteren weist das Hybridmodul ein Hybridmodulgehäuse auf. Ein vom Hybridmodulgehäuse ausgebildeter Hybridmodul-Innenraum wird dabei von einer ersten Dichtung, insbesondere einer Fluid-Dichtung, fluiddicht abgedichtet. Die erste Dichtung ist zwischen einem Rotationsbauteil, insbesondere einer Nabe einer Kupplungseinrichtung, des Hybridmoduls und dem Druckstück angeordnet.

Des Weiteren kann das Hybridmodul noch eine zweite Dichtung zwischen Hybridmodulgehäuse und Rotationsbauteil aufweisen sowie eine dritte Dichtung zwischen Hybridmodulgehäuse und Schwingungsdämpfer.

Weiterhin kann die Abdichtung des Hybridmodul-Innenraums einen O-Ring umfassen, welcher zwischen Druckstück und Schwingungsdämpfer ausgebildet ist.

Derart kann im Hybridmodul-Innenraum aufgenommenes Öl am Austritt gehindert werden und das gesamte Hybridmodul ölbefüllt einem Kunden geliefert und dort montiert werden.

Weiterhin wird das erfindungsgemäße Hybridmodul vorzugsweise derart realisierst, dass die Zähne der Verzahnung am ersten Verzahnungselement entlang ihrer radialen Erstreckung auch eine Erstreckung mit axialer Komponente aufweisen.

Dies gilt natürlich entsprechend auch für das zweite Verzahnungselement der Axial-Verzahnung. Entsprechend ist die gesamte Verzahnung leicht konisch ausgestaltet, so dass bei Anlage der beiden Verzahnungselemente aneinander eine axial zentrierte Positionierung der beiden Verzahnungselemente zueinander gewährleistet ist. Dabei bildet die axiale Begrenzung eines jeweiligen Zahnkopfes einen Winkel zu einer Ebene aus, welche im Wesentlichen senkrecht zur Rotationsachse der Kurbelwelle liegt. Der Winkel liegt dabei in einem Bereich zwischen 1° und 10°, vorzugsweise zwischen 3° und 7°.

Das erfindungsgemäße Hybridmodul weist den Vorteil auf, dass durch die Einbindung einer Axial-Verzahnung, insbesondere einer Hirth-Verzahnung, nur ein gering bemessener axialer Bauraum zur Verfügung gestellt werden muss, um das Hybridmodul anzuordnen und zu montieren.

Ein weiterer Vorteil ist, dass eine komplette Vormontierung und Befüllung mit Öl realisiert werden kann, bevor das Hybridmodul an den Kunden gesendet wird, wobei eine Montage des Hybridmoduls am Abtriebselement weiterhin nur mit einem Schritt, nämlich dem Verschrauben des Eingangselements, mit der Kurbelwelle realisierbar ist. Auch ein Test der Funktionstüchtigkeit des ölbefüllten Hybridmoduls kann bereits beim Hersteller erfolgen, wodurch der Kunde in seinem Workload und seiner Verantwortung entlastet wird. Das Hybridmodul muss somit vom Kunden nicht mit Öl befüllt werden und kann über die zugängliche Verschraubungsstelle einfach montiert werden, wodurch Montagezeit und -aufwand und somit Kosten gesenkt werden können.

Ein weiterer Aspekt der vorliegenden Erfindung ist ein Verfahren zur Montage des Hybridmoduls. Das erfindungsgemäße Hybridmodul wird dabei an ein Abtriebselement, insbesondere an ein Abtriebselement einer Verbrennungskraftmaschine wie zum Beispiel eine Kurbelwelle, gekoppelt. Dabei wird das Eingangselement mit dem ersten Axial-Verzahnungselement, welches insbesondere als Hirth-Verzahnungselement ausgeführt ist, an ein komplementär ausgestaltetes zweites Axial-Verzahnungselement, welches ebenfalls insbesondere als Hirth-Verzahnungselement ausgeführt, an dem Abtriebselement angelegt. Die Position der beiden Verzahnungselemente aneinander wird mittels wenigstens einer Schraubverbindung fixiert, so dass die beiden Verzahnungselemente eine Axial-Verzahnung, insbesondere eine Hirth-Verzahnung, ausbilden. Derart wird das Abtriebselement mit dem Eingangselement zur Übertragung von Drehmoment form- und/oder kraftschlüssig gekoppelt.

Weiterhin kann die Schraubverbindung durch einen zentral das erste Axial-Verzahnungselement und das zweite Axial-Verzahnungselement verbindenden Schraub-Bolzen realisiert werden. Das zur Verschraubung erforderliche Drehmoment wird dabei zentral durch das Hybridmodul auf den Schraub-Bolzen aufgebracht.

Bei einer entsprechend hohlen Ausgestaltung des zentralen Bereichs des Hybridmoduls, wie zum Beispiel zwecks späterer Anordnung einer Getriebeeingangswelle, lässt sich also das Drehmoment auf den Schraub-Bolzen in einfacher Weise durch diesen zentralen hohlen Bereich aufbringen, sodass kein zusätzlicher Bauraum benötigt wird, um die axial verbindende Axial-Verzahnung zu realisieren.

Vorzugsweise wird das Verfahren zur Montage des Weiteren derart ausgeführt, dass das Hybridmoduls bereits mit Öl befüllt zur Verfügung gestellt wird und an das Abtriebselement im ölbefüllten Zustand angeschlossen wird.

Des Weiteren wird erfindungsgemäß eine Antriebsanordnung für ein Kraftfahrzeug zur Verfügung gestellt, die ein erfindungsgemäßes Hybridmodul sowie ein Antriebsaggregat aufweist, wobei das Antriebsaggregat insbesondere eine Verbrennungskraftmaschine ist, welche ein Abtriebselement, insbesondere eine Kurbelwelle, aufweist, das ein zweites Axial-Verzahnungselement, insbesondere ein zweites Hirth- Verzahnungselement umfasst, welches zusammen mit dem ersten Axial-Verzahnungselement, das insbesondere ein erstes Hirth- Verzahnungselement ist, eine Axial-Verzahnung ausbildet, so dass das Abtriebselement mit dem Hybridmodul rotationsfest gekoppelt ist.

Gegebenenfalls ist die Verzahnung wenigstens eines der beiden Verzahnungselemente durch eine verzahnte Scheibe realisiert. Die verzahnte Scheibe ist dabei mit mehreren Schraubenverbindungen an dem jeweiligen, die Verzahnung tragenden Element befestigt, wobei eine Schraubenverbindung vorzugsweise mittels einer Schraube realisiert wird. Entsprechend kann auch das Hybridmodul an dessen Eingangselement eine solche Scheibe aufweisen.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigten Ausführungsbeispiele nicht auf die dargestellten Maße eingeschränkt sind.

Es ist dargestellt in
- Fig. 1:: ein Teilschnitt einer Antriebsanordnung, umfassend ein Hybridmodul gemäß dem Stand der Technik,
- Fig. 2:: ein Teilschnitt eines erfindungsgemäßen Hybridmoduls inkorporiert in einen Antriebsstrang und
- Fig. 3:: ein Teilschnitt eines erfindungsgemäßen Hybridmoduls inkorporiert in einen Antriebsstrang, umfassend eine verzahnte Scheibe.

In Fig. 1 ist ein Teilschnitt einer Antriebsanordnung, umfassend ein Hybridmodul gemäß dem Stand der Technik dargestellt. Auf die Antriebsanordnung nach Figur 1 wurde einleitend bei der Beschreibung des Standes der Technik bereits eingegangen.

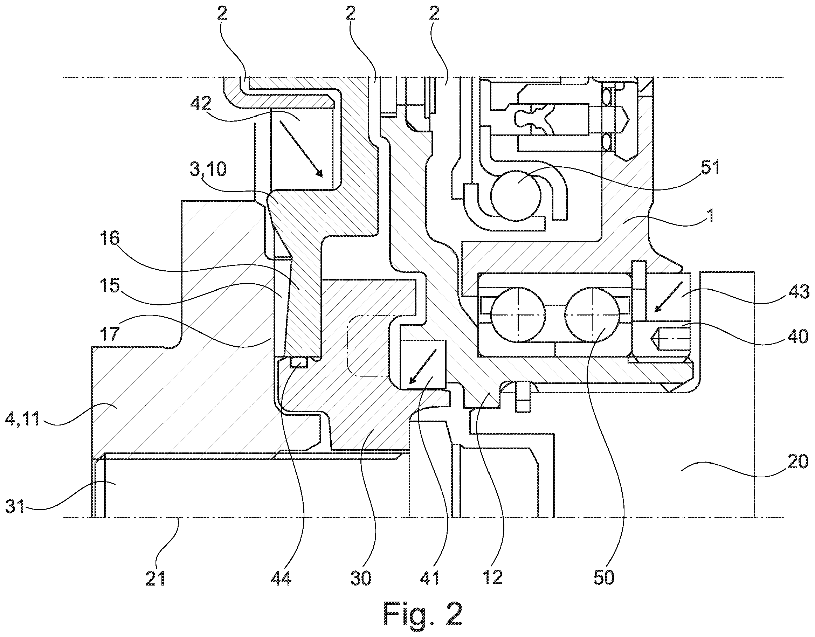

In Fig. 2 ist ein Teilschnitt eines erfindungsgemäßen Hybridmoduls in einem Antriebsstrang inkorporiert dargestellt. Gezeigt sind dabei unter anderem eine Kurbelwelle 11, ein Schwingungsdämpfer 10, ein Druckstück 30, ein Schraub-Bolzen 31, eine Kupplungseinrichtung 12 und eine Getriebewelle 20. Dabei sind der Schwingungsdämpfer 10, das Druckstück 30 und die Kupplungseinrichtung 12 zumindest bereichsweise im oder am Hybridmodulgehäuse 1 angeordnet. Das Drehmoment wird von der Kurbelwelle 11 zum Schwingungsdämpfer 10 und von diesem über die Kupplungseinrichtung 12 an die Getriebewelle 20 übertragen. Die Bauteile rotieren dabei um die gemeinsame Rotationsachse 21 des Hybridmoduls. Zwischen Kurbelwelle 11 und Schwingungsdämpfer 10 ist dabei für eine Drehmomentübertragung eine Axial-Verzahnung 15 realisiert, wobei der Schwingungsdämpfer 10 als Eingangselement 3 ein erstes Axial-Verzahnungselement 16 und die Kurbelwelle 11 als Ausgangselement 4 ein zweites Axial-Verzahnungselement 17 aufweist.

Dabei bilden die beiden Axial-Verzahnungselemente 16, 17 vorzugsweise eine Hirth-Verzahnung aus.

Die Zähne der Axial-Verzahnung 15 erstrecken sich dabei radial und weisen eine axiale Komponente auf. Das erste Axial-Verzahnungselement 16 und zweite Axial-Verzahnungselement 17 sind somit konisch ausgestaltet, wodurch eine Zentrierung der Verzahnungselemente 16, 17 unterstützt wird, wobei hier die Kurbelwelle 11 einen Innenkonus und der Schwingungsdämpfer 10 einen Außenkonus der konischen Axial-Verzahnung 15 ausbildet. Alternativ kann die Axial-Verzahnung 15 natürlich auch mit entgegengesetzter Zuordnung von Innen- und Außenkonus zum Schwingungsdämpfer 10 bzw. zur Kurbelwelle 11 ausgestaltet sein. Die axiale Begrenzung eines jeweiligen Zahnkopfes weist in der hier gezeigten Ausgestaltung einen Winkel zu einer Ebene auf, welche im Wesentlichen senkrecht zur Rotationsachse 21 des Hybridmoduls steht. Der Winkel liegt dabei in einem Bereich zwischen 1° und 10°, vorzugsweise zwischen 3° und 7°, insbesondere 5°. Dabei ist ein Schraub-Bolzen 31 zentral angebracht und mit der Kurbelwelle 11 verschraubt. Mittels der vom Schraub-Bolzen erzeugten axial wirkenden Kraft werden die am Schwingungsdämpfer 10 und Kurbelwelle 11 ausgebildeten Verzahnungselemente 16, 17 axial aneinander gedrückt, um ein Drehmoment übertragen zu können.

Weiterhin dargestellt sind ein Ausrücklager 51 sowie ein Kugellager 50, welche zwischen der Kupplungseinrichtung 12 und dem Hybridmodulgehäuse 1 angeordnet sind. Dabei ist das Kugellager 51 mittels einer Spannmutter 40 gegen das Hybridmodulgehäuse 1 und die Kupplungseinrichtung 12 verspannt.

Weiterhin zeigt die Figur 2 mehrere Dichtungselemente 41, 42, 43, 44. Dabei ist ein erstes Dichtungselement 41 zwischen dem Druckstück 30 und der Kupplungseinrichtung 12 und ein zweites Dichtungselement 42 zwischen dem Schwingungsdämpfer 10 und dem Hybridmodulgehäuse 1 angeordnet. Ein drittes Dichtungselement 43 liegt auf einer von der Spannmutter 40 ausgebildeten Lauffläche auf und dichtet an dem Hybridmodulgehäuse 1 ab. Außerdem ist ein Dichtring 44 in Form eines O-Rings zwischen dem Druckstück 30 und dem Schwingungsdämpfer 11 angeordnet. Diese Dichtelemente 41, 42, 43, 44 begrenzen einen Hybridmodul-Innenraum 2 und dichten diesen fluiddicht ab. Demzufolge ist es möglich, eine komplette Montage und Ölbefüllung des Hybridmoduls beim Hersteller durchzuführen und ein derart komplettiertes Hybridmodul einem Kunden anzuliefern. Ein Kunde kann dann den Einbauraum der Getriebewelle 20 nutzen, um den Schraub-Bolzen 31 in eine Kurbelwelle 11 zu verschrauben und derart die drehmomentfeste Verbindung zwischen Hybridmodul und Kurbelwelle herzustellen. Da die Verschraubung im Wesentlichen durch den verfügbaren Raum koaxial zur Rotationsachse 21 vorgenommen wird, ist kein Bauraum in axialer Richtung für die Montage freizuhalten. Nach erfolgtem Anschluss des Hybridmoduls kann die Getriebewelle 20 einfach eingesetzt werden. Ein Drehmoment, das beim Verschrauben des Schraub-Bolzen 31 benötigt wird, wird im Wesentlichen auf das Druckstück 30 und nicht auf den Schwingungsdämpfer 10 geleitet, so dass sich die Montage in einfacher Weise sowie zeitminimiert durchführen lässt. Dafür ist ein Gegen-Drehmoment auf den Schwingungsdämpfer 10 bzw. auf die Kurbelwelle 11 aufzubringen.

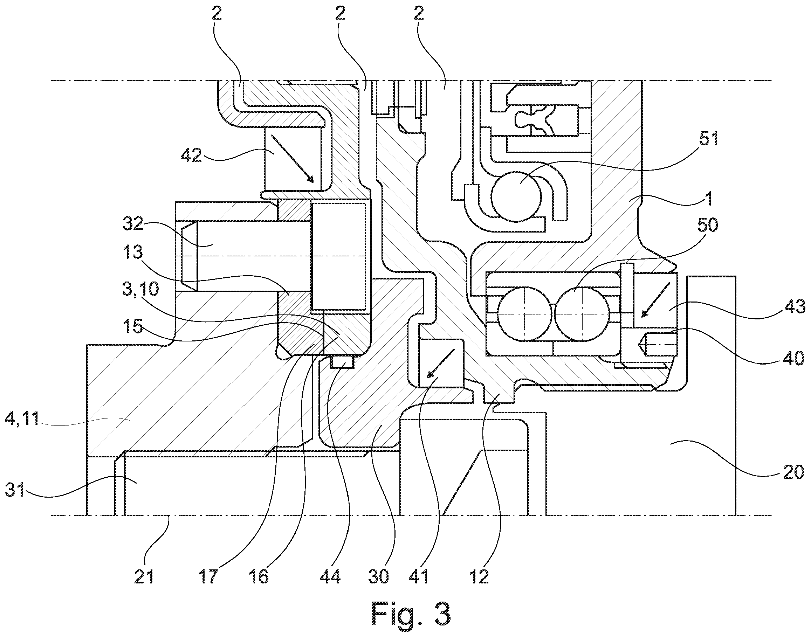

Der Aufbau des in Figur 3 dargestellten Hybridmoduls entspricht, abgesehen vom Schwingungsdämpfer 10 sowie der Kurbelwelle 11, dem in Figur 2 gezeigten Hybridmodul.

Anders ist hier, dass das zweite Axial-Verzahnungselement 17 von einem extra Bauteil, nämlich einer verzahnten Scheibe 13, ausgebildet ist. Diese ist mittels mindestens einer Schraubenverbindung 32 an der Kurbelwelle 11 fixiert. Ein Drehmoment wird hier von der Kurbelwelle 11 über die an der Kurbelwelle 11 mittels Schraubenverbindungen 32 fixierte verzahnte Scheibe 13, welche das zweite Axial-Verzahnungselement 17 ausbildet, an den das erste Axial-Verzahnungselement 16 aufweisenden Schwingungsdämpfer 10 übertragen. Dieser Aufbau des in Figur 3 dargestellten Hybridmoduls bietet die Option, eine aus dem Stand der Technik bekannte Kurbelwelle 11 einzusetzen, da diese die für die Anbringung der verzahnten Scheibe 13 notwendigen Gewinde bereits aufweist, da mittels diesen eine aus dem Stand der Technik bekannte mehrfache Verschraubung der Kurbelwelle 11 am Schwingungsdämpfer 10 realisiert wird. Somit ist das erfindungsgemäße Hybridmodul für den Kunden einsetzbar, ohne dass dieser Umgestaltungen an den bislang verwendeten Kurbelwellen 11 vornehmen muss.

Mit der vorliegenden Erfindung werden ein Hybridmodul sowie ein Verfahren zur Montage des Hybridmoduls zur Verfügung gestellt, welche einen geringen Bauraumbedarf mit einer kostengünstigen und einfachen Montage kombinieren.

### Bezugszeichenliste

- 1: Hybridmodulgehäuse
- 2: Hybridmodul-Innenraum
- 3: Eingangselement
- 4: Abtriebselement
- 10: Schwingungsdämpfer
- 11: Kurbelwelle
- 12: Kupplungseinrichtung
- 13: verzahnte Scheibe
- 15: Axial-Verzahnung
- 16: erstes Axial-Verzahnungselement
- 17: zweites Axial-Verzahnungselement
- 20: Getriebewelle
- 21: Rotationsachse
- 30: Druckstück
- 31: Schraub-Bolzen
- 32: Schraubenverbindung
- 40: Spannmutter
- 41: erstes Dichtungselement
- 42: zweites Dichtungselement
- 43: drittes Dichtungselement
- 44: Dichtring
- 50: Kugellager
- 51: Ausrücklager

## Patentansprüche

1. Hybridmodul für ein Kraftfahrzeug zum Ankoppeln einer Verbrennungskraftmaschine sowie eines Getriebes, umfassend eine elektrische Maschine, eine Kupplungseinrichtung (12) sowie ein Eingangselement (3), welches insbesondere an einem vom Hybridmodul umfassten Schwingungsdämpfer (10) wie z.B. einem Zweimassenschwungrad ausgebildet ist, mit welchem das Hybridmodul an einem Abtriebselement (4), insbesondere ein Abtriebselement (4) einer Verbrennungskraftmaschine wie zum Beispiel eine Kurbelwelle (11), zur Übertragung von Drehmoment anschließbar ist, wobei das Eingangselement (3) ein erstes Axial-Verzahnungselement (16), insbesondere ein erstes Hirth- Verzahnungselement, aufweist, mit welchem das Eingangselement (3) zusammen mit einem komplementär ausgestalteten zweiten Axial-Verzahnungselement (17), insbesondere einem zweiten Hirth-Verzahnungselement, an einem Abtriebselement (4) eine Axial-Verzahnung (15), insbesondere eine Hirth- Verzahnung, ausbilden kann, um das Abtriebselement (4) mit dem Eingangselement (3) zur Übertragung von Drehmoment auf das Hybridmodul form- und/oder kraftschlüssig zu koppeln, und das erste Axial-Verzahnungselement (16) dazu ausgestaltet ist, mittels wenigstens einer Schraubverbindung mit dem zweiten Axial-Verzahnungselement (17) axial fest verbunden zu werden,
**dadurch gekennzeichnet,**
**dass** sich die Schraubverbindung axial an einem Druckstück (30) abstützt, welches wiederum zur axialen Anlage am ersten Axial-Verzahnungselement (16) ausgebildet ist, um dieses in Richtung auf das zweite Axial-Verzahnungselement (17) zu drücken.

2. Hybridmodul nach Anspruch 1,
**dadurch gekennzeichnet,**
**dass** die Schraubverbindung durch einen zentral durch das erste Axial-Verzahnungselement (16) führenden Schraub-Bolzen (31) realisierbar oder realisiert ist.

3. Hybridmodul nach einem der vorhergehenden Ansprüche,
**dadurch gekennzeichnet,**
**dass** das Hybridmodul ein Hybridmodulgehäuse (1) aufweist, wobei ein erstes Dichtungselement (41), insbesondere eine Fluid-Dichtung, zwischen einem Rotationsbauteil, insbesondere einer Nabe einer Kupplungseinrichtung (12) des Hybridmoduls und dem Druckstück (30) angeordnet ist, um einen vom Hybridmodulgehäuse (1) ausgebildeten Hybridmodul-Innenraum (2) fluiddicht abzudichten.

4. Hybridmodul nach einem der vorhergehenden Ansprüche,
**dadurch gekennzeichnet,**
**dass** die Zähne der Verzahnung am ersten Verzahnungselement (16) entlang ihrer radialen Erstreckung auch eine Erstreckung mit axialer Komponente aufweisen.

5. Verfahren zur Montage des Hybridmoduls nach einem der Ansprüche 1 bis 4 an einem Abtriebselement (4), insbesondere ein Abtriebselement (4) einer Verbrennungskraftmaschine wie zum Beispiel eine Kurbelwelle (11), bei dem das Hybridmodul sowie das Abtriebselement (4) zur Verfügung gestellt werden, und das Eingangselement (3) mit dem ersten Axial-Verzahnungselement (16) an einen komplementär ausgestalteten zweiten Axial-Verzahnungselement (17) an dem Abtriebselement (4) angelegt und in dieser Position die beiden Verzahnungselemente (16, 17) mittels wenigstens einer Schraubverbindung aneinander fixiert werden, so dass die beiden Verzahnungselemente (16, 17) eine Axial-Verzahnung (15) ausbilden und derart das Abtriebselement (4) mit dem Eingangselement (3) zur Übertragung von Drehmoment form- und/ oder kraftschlüssig gekoppelt wird,
und die Schraubverbindung durch einen zentral das erste Axial-Verzahnungselement (16) und das zweite Axial-Verzahnungselement (17) verbindenden Schraub-Bolzen (31) realisiert wird, wobei das zur Verschraubung erforderliche Drehmoment zentral durch das Hybridmodul auf den Schraub-Bolzen (31) aufgebracht wird, **dadurch gekennzeichnet, dass** ein Druckstück (30) axial zwischen der Schraubverbindung und dem Schaub-Bolzen zur Verfügung gestellt wird, so dass sich die Schraubverbindung axial an dem Druckstück (30) abstützt, welches wiederum zur axialen Anlage am ersten Axial-Verzahnungselement (16) ausgebildet ist, um dieses in Richtung auf das zweite Axial-Verzahnungselement (17) zu drücken.

6. Antriebsanordnung, umfassend das Hybridmodul nach einem der Ansprüche 1 bis 4 sowie ein Antriebsaggregat, insbesondere eine Verbrennungskraftmaschine, welches ein Abtriebselement (4), insbesondere eine Kurbelwelle (11), aufweist, das ein zweites Axial-Verzahnungselement (17) umfasst, welches zusammen mit dem ersten Axial-Verzahnungselement (16) eine Axial-Verzahnung (15), insbesondere eine Hirth-Verzahnung, ausbildet, so dass das Abtriebselement (4) mit dem Hybridmodul rotationsfest gekoppelt ist.

7. Antriebsanordnung nach Anspruch 6,
**dadurch gekennzeichnet,**
**dass** die Verzahnung wenigstens eines der beiden Verzahnungselemente (16, 17) durch eine verzahnte Scheibe (13) realisiert ist, die mit mehreren Schraubenverbindungen (32) an dem jeweiligen, die Verzahnung tragenden Element befestigt ist.

## Claims

1. A hybrid module for a motor vehicle for coupling an internal combustion engine and a transmission, comprising an electric machine, a clutch device (12) and an input element (3), which is formed in particular on a vibration damper (10) such as a dual-mass flywheel, comprised by the hybrid module, with which the hybrid module can be connected to an output element (4), in particular an output element (4) of an internal combustion engine, such as a crankshaft (11), for the transmission of torque, the input element (3) having a first axial toothing element (16), in particular a first Hirth toothing element, with which the input element (3) can form an axial toothing (15), in particular a Hirth toothing, together with a complementary second axial toothed element (17), in particular a second Hirth toothing element, on an output element (4) in order to couple the output element (4) in a form-fitting and/or force-fitting manner to the input element (3) for transferring torque to the hybrid module, and the first axial toothing element (16) is designed to be axially fixed to the second axial toothing element (17) by means of at least one screw connection,
**characterised in that**
the screw connection is axially supported on a pressure piece (30), which in turn is formed for axial contact with the first axial toothing element (16) in order to press the same in the direction of the second axial toothing element (17).

2. The hybrid module according to Claim 1,
**characterised in that**
the screw connection can be or is implemented by a screw bolt (31) passing centrally through the first axial toothing element (16).

3. The hybrid module according to one of the preceding claims,
**characterised in that**
the hybrid module has a hybrid module housing (1), wherein a first sealing element (41), in particular a fluid seal, is arranged between a rotary component, in particular a hub of a coupling device (12) of the hybrid module and the pressure piece (30), in order to seal, in a fluid-tight manner, a hybrid module interior (2) formed by the hybrid module housing (1).

4. The hybrid module according to one of the preceding claims,
**characterised in that**
the teeth of the toothing on the first toothing element (16) also have an extension with an axial component along their radial extension.

5. A method for mounting the hybrid module according to one of Claims 1 to 4 on an output element (4), in particular an output element (4) of an internal combustion engine, such as a crankshaft (11), in which the hybrid module and the output element (4) are provided, and the input element (3) with the first axial toothing element (16) is placed on a complementary second axial toothing element (17) on the output element (4) and, in this position, the two toothing elements (16, 17) are fixed to one another by means of at least one screw connection, so that the two toothing elements (16, 17) form an axial toothing (15) and the output element (4) is thereby coupled with the input element (3) to transmit torque in a form-fitting and/or force-fitting manner,
and the screw connection is realised by a screw bolt (31) centrally connecting the first axial toothing element (16) and the second axial toothing element (17), the torque required for screwing being applied centrally by the hybrid module to the screw bolt (31), **characterised in that** a pressure piece (30) is provided axially between the screw connection and the screw bolt so that the screw connection is supported axially on the pressure piece (30), which in turn is formed for axial contact with the first axial toothing element (16) in order to press the same in the direction of the second axial toothing element (17).

6. A drive arrangement, comprising the hybrid module according to one of Claims 1 to 4 and a drive unit, in particular an internal combustion engine, which has an output element (4), in particular a crankshaft (11), which comprises a second axial toothing element (17) which, together with the first axial toothing element (16) forms an axial toothing (15), in particular a Hirth toothing, so that the output element (4) is coupled to the hybrid module in a rotationally fixed manner.

7. The drive arrangement according to Claim 6,
**characterised in that**
the toothing of at least one of the two toothed elements (16, 17) is realised by a toothed washer (13) which is fastened with a plurality of screw connections (32) to the respective element carrying the toothing.

## Revendications

1. Module hybride pour un véhicule automobile pour coupler un moteur thermique et une transmission, comprenant un moteur électrique, un dispositif d'embrayage (12) et un élément d'entrée (3), lequel est formé notamment sur un amortisseur de vibrations (10) compris par le module hybride, tel qu'un volant bimasse, avec lequel le module hybride peut être relié à un élément de sortie (4), en particulier un élément de sortie (4) d'un moteur thermique, par exemple un vilebrequin (11), pour la transmission du couple, l'élément d'entrée (3) comportant un premier élément de denture axiale (16), en particulier un premier élément de denture Hirth, avec lequel l'élément d'entrée (3) conjointement avec un deuxième élément de denture axiale (17) configuré de manière complémentaire, en particulier un deuxième élément de denture Hirth, peut former une denture axiale (15), en particulier une denture Hirth, sur un élément de sortie (4), afin de coupler l'élément de sortie (4) avec l'élément d'entrée (3) pour la transmission du couple au module hybride par complémentarité de forme et/ou liaison de force et le premier élément de denture axiale (16) est conçu pour être fixé fermement dans le sens axial au deuxième élément de denture axiale (17) au moyen d'au moins une liaison par vissage,
**caractérisé en ce que**
la liaison par vissage s'appuie dans le sens axial sur une pièce de pression (30), qui à son tour est conçue pour un appui axial sur le premier élément de denture axiale (16) afin de le pousser en direction du deuxième élément de denture axiale (17).

2. Module hybride selon la revendication 1,
**caractérisé en ce que**
la liaison par vissage peut être ou est réalisée par un boulon fileté (31) traversant au centre le premier élément de denture axiale (16).

3. Module hybride selon l'une quelconque des revendications précédentes,
**caractérisé en ce que**
le module hybride présente un boîtier de module hybride (1), dans lequel un premier élément d'étanchéité (41), en particulier un joint fluidique, est disposé entre un composant rotatif, en particulier un moyeu d'un dispositif d'embrayage (12) du module hybride et la pièce de pression (30), afin de réaliser l'étanchéité aux fluides d'un espace interne du module hybride (2) conçu par le boîtier du module hybride (1).

4. Module hybride selon l'une quelconque des revendications précédentes,
**caractérisé en ce que**
les dents de la denture sur le premier élément de denture (16) présentent également un prolongement avec une composante axiale le long de leur étendue radiale.

5. Procédé de montage du module hybride selon l'une quelconque des revendications 1 à 4 sur un élément de sortie (4), notamment un élément de sortie (4) d'un moteur thermique, par exemple un vilebrequin (11), dans lequel le module hybride et l'élément de sortie (4) sont mis à disposition et l'élément d'entrée (3) avec le premier élément de denture axiale (16) est appuyé sur un deuxième élément de denture axiale (17) configuré de manière complémentaire sur l'élément de sortie (4) et les deux des éléments de denture (16, 17) sont fixés l'un à l'autre dans cette position au moyen d'au moins une liaison par vissage, de sorte que les deux éléments de denture (16, 17) forment une denture axiale (15) et de sorte que l'élément de sortie (4) est couplé avec l'élément d'entrée (3) par complémentarité de forme et/ou liaison de force pour la transmission du couple,
et la liaison par vissage est réalisée par un boulon fileté (31) reliant au centre le premier élément de denture axiale (16) et le deuxième élément de denture axiale (17), le couple nécessaire au vissage étant appliqué au centre par le module hybride sur le boulon fileté (31), **caractérisé en ce qu'**une pièce de pression (30) est prévue dans le sens axial entre la liaison par vissage et le boulon fileté, de sorte que la liaison par vissage s'appuie dans le sens axial sur la pièce de pression (30), qui à son tour est conçue pour un appui axial sur le premier élément de denture axiale (16) pour le pousser en direction du deuxième élément de denture axiale (17).

6. Dispositif d'entraînement comprenant le module hybride selon l'une quelconque des revendications 1 à 4 et un groupe moteur, en particulier un moteur thermique, qui présente un élément de sortie (4), en particulier un vilebrequin (11), qui comprend un second élément de denture axiale (17) qui forme avec le premier élément de denture axiale (16) une denture axiale (15), en particulier une denture Hirth, de sorte que l'élément de sortie (4) est couplé au module hybride de manière fixe en rotation.

7. Dispositif d'entraînement selon la revendication 6,
**caractérisé en ce que**
la denture d'au moins un des deux éléments de denture (16, 17) est réalisée par une rondelle dentée (13) qui est fixée par plusieurs liaisons par vissage (32) à l'élément respectif portant la denture.
